# EUROPEAN PATENT APPLICATION

(11) **EP 2 481 470 A1**
(43) Date of publication of application: **01.08.2012**
(21) Application number: 11152945.9
(22) Date of filing: 01.02.2011
(51) Int. Cl.: B01D 53/14

(54) **Process gas treatment system**

(71) Applicant: ALSTOM Technology Ltd, 5400 Baden (CH)
(72) Inventor: Åhman, Stefan, 352 42, Växjö (SE)
(74) Representative: Presland, Torbjörn

(57) **Abstract**

The present invention relates to a CO2 removal system (1) for removing CO2 from a CO2 rich gas stream, said system comprising: a CO2 capture arrangement (2) configured to receive the CO2 rich gas stream and contacting the gas stream with an ammoniated solution stream to produce a CO2 lean gas stream; and a chiller arrangement (3) comprising: a first heat exchanger (7) configured to receive the CO2 rich gas stream and chill the gas stream by means of heat exchanging with circulating cooling medium, and a second heat exchanger (8) configured to receive circulating cooling medium, and chill the circulating cooling medium by means of heat exchanging with the CO2 lean gas stream; wherein parts of the first (7) and second (8) heat exchangers are comprised in first and second cooling medium loops for the circulating cooling medium, wherein the second cooling medium loop is configured for a lower flow rate than the first cooling medium loop.

## Description

### Technical Field

The present disclosure relates to a system and method for removal of carbon dioxide from a process gas by contacting the process gas with an ammoniated solution.

### Background

Most of the energy used in the world today is derived from the combustion of carbon and hydrogen containing fuels such as coal, oil and natural gas, as well as other organic fuels. Such combustion generates flue gases containing high levels of carbon dioxide. Due to the concerns about global warming, there is an increasing demand for the reduction of emissions of carbon dioxide to the atmosphere, why methods have been developed to remove the carbon dioxide from flue gases before the gas is released to the atmosphere.

WO 2006/022885 discloses one such method of removing carbon dioxide from a flue gas, which method includes capturing carbon dioxide from the flue gas in a CO2 absorber by means of an ammoniated solution or slurry. The CO2 is absorbed by the ammoniated solution in the absorber at a reduced temperature of between 0°C and 20°C, after which the ammoniated solution is regenerated in a regenerator under elevated pressure and temperature to allow the CO2 to escape the ammoniated solution as gaseous carbon dioxide of high purity.

### Summary

An objective of the present invention is to improve the carbon dioxide removal with an ammoniated solution.

This objective, as well as other objectives that will be clear from the following, are according to the present disclosure achieved by the below discussed aspects thereof.

According to one aspect of the present disclosure, there is provided a carbon dioxide (CO2) removal system for removing CO2 from a CO2 rich gas stream, said system comprising: a CO2 capture arrangement comprising a CO2 absorber configured to receive the CO2 rich gas stream and contacting the gas stream with an ammoniated solution stream such that CO2 is removed from the gas stream by the ammoniated solution stream to form a CO2 rich ammoniated solution stream and a CO2 lean gas stream; and a chiller arrangement comprising: a first heat exchanger configured to receive the CO2 rich gas stream prior to it being received by the CO2 absorber, chill the gas stream by means of heat exchanging with circulating cooling medium, and allow the chilled gas stream to leave the first heat exchanger towards the CO2 capture arrangement, and a second heat exchanger configured to receive circulating cooling medium, and chill the circulating cooling medium by means of heat exchanging with the CO2 lean gas stream from the CO2 capture arrangement; wherein at least parts of the first and second heat exchangers are comprised in first and second cooling medium loops for the circulating cooling medium, wherein the second cooling medium loop is configured for a lower flow rate than the first cooling medium loop.

By separating the cooling medium of the chiller arrangement into two different cooling medium loops, the arrangement is made more flexible and different flow rates of the cooling medium may be used in the different loops. Thus, the second loop may be configured for a lower flow rate than the first loop. By e.g. lowering the flow rate of a part of the cooling medium being chilled by the CO2 lean process gas, a lower temperature of the cooling medium may be obtained than for a higher cooling medium flow rate, if the flow rate of the CO2 lean process gas is the same. It may be difficult and thus expensive to obtain low temperature cooling medium. Common sources of cheap cooling media such as sea water and cooling water from cooling towers may e.g. have a relatively high temperature, especially in the summertime, why it may be necessary to use e.g. an electrical chiller to obtain a necessary low temperature of the cooling medium, which makes the furnishing of the chilled cooling medium much more expensive. It may thus, for system wide energy conservation, be convenient to use the cold CO2 lean process gas to obtain a colder stream of cooling medium having a lower flow rate than a less cold stream of cooling medium having a higher flow rate. However, it may not be convenient to reduce the flow rate of all the circulating cooling medium in the chiller arrangement. Thus, it has been found that these problems may be alleviated by using two different cooling medium loops having different flow rates.

According to another aspect of the present disclosure, there is provided a method for the operation of a chiller arrangement of a carbon dioxide (CO2) removal system for removing CO2 from a CO2 rich gas stream, said system comprising a CO2 capture arrangement comprising a CO2 absorber configured to receive the CO2 rich gas stream and contacting the gas stream with the ammoniated solution stream such that CO2 is removed from the gas stream by the ammoniated solution stream to form a CO2 rich ammoniated solution stream and a CO2 lean gas stream, the method comprising: receiving, by a first heat exchanger of the chiller arrangement, the CO2 rich gas stream prior to it being received by the CO2 absorber; chilling the CO2 rich gas stream by means of a circulating cooling medium in the first heat exchanger; allowing the chilled CO2 rich gas stream to leave the first heat exchanger towards the CO2 capture arrangement; receiving, by a second heat exchanger of the chiller arrangement, a circulating cooling medium; and chilling the circulating cooling medium by means of heat exchanging with the CO2 lean gas stream from the CO2 capture arrangement in the second heat exchanger; wherein the circulating cooling medium of the first and second heat exchangers is circulated in first and second cooling medium loops wherein the flow rate of the second cooling medium loop is lower than the flow rate of the first cooling medium loop.

The discussion above in respect of the system is also in applicable parts relevant to the method.

### Brief Description of the Drawings

Currently preferred embodiments will now be discussed with reference to the drawings, in which:
Fig 1 is a schematic front view of a specific embodiment of a system according to the present invention.
Fig 2 is a schematic front view of another specific embodiment of a system according to the present invention.

### Detailed Description of Exemplary Embodiments

The process gas may be any type of process gas containing carbon dioxide, such as flue gas from any combustion device such as furnaces, process heaters, incinerators, package boilers, and power plant boilers.

The ammoniated solution may be any type of solution containing ammonia, such as a liquid solution, especially an aqueous solution. The ammonia in the ammoniated solution may e.g. be in the form of ammonium ions and/or dissolved molecular ammonia. The ammoniated solution is typically aqueous and may be composed of, for example, water, ammonia, carbon dioxide and derivatives thereof.

The capturing of CO2 from the process gas by the ammoniated solution may be achieved by the ammoniated solution absorbing or dissolving the CO2 in any form, such as in the form of dissolved molecular CO2, carbonate or bicarbonate.

The cooling medium of the chiller arrangement may be any cooling medium able to operate in liquid form in a temperature range of from about 5°C to about 40°C typically at atmospheric pressure, such as a conventional cooling medium e.g. water, possibly with some additive compounds.

The carbon dioxide removal system comprises piping that connects the different parts of the system and is arranged to allow ammoniated solution and process gas, respectively, to flow through the system as needed. The piping may comprise valves, pumps, nozzles etc. as appropriate to control the flow of cooling medium, ammoniated solution and process gas etc, respectively.

As used in the present disclosure, the process gas is called CO2 rich before it is entered into the CO2 absorber and contacted with the ammoniated solution, and CO2 lean after it has been contacted with the ammoniated solution in the CO2 absorber. Similarly, the ammoniated solution may be called CO2 lean before being contacted with the process gas in the CO2 absorber and CO2 rich after having been contacted with the process gas in the CO2 absorber and e.g. before being regenerated to CO2 lean ammoniated solution.

The carbon dioxide removal system may thus further comprise a regeneration arrangement comprising a regenerator configured to receive the CO2 rich ammoniated solution stream from the CO2 capture arrangement, and to separate CO2 from the ammoniated solution to form a CO2 lean ammoniated solution stream, and to return said CO2 lean ammoniated solution stream to the CO2 capture arrangement. An essentially pure leaving CO2 stream may be formed, which CO2 may be e.g. bottled to be sold or otherwise stored to avoid direct release to the atmosphere.

Since ammonia, as well as CO2, is a rather volatile compound, it may be convenient to perform the CO2 absorption at a reduced temperature to reduce the loss of ammonia from the ammoniated solution to the process gas in the CO2 capture arrangement. Also, the removal/absorption of CO2 from the process gas by the ammoniated solution may be an exoterm reaction. Thus, a chiller arrangement is needed to cool down the process gas before it enters the CO2 capture arrangement. For example flue gas from a power plant typically passes a dust removal system and a scrubber before entering the CO2 removal system. The process gas entering the CO2 removal system may e.g. have a temperature of more than 20°C, such as more than 30°C or more than 40°C, typically in the range of 30-100°C, such as 30-80°C or 30-70°Cor40-60°C.

The chiller arrangement may be configured to cool the process gas to a temperature of less than 20°C, such as less than 15°C, before the process gas enters the CO2 capture arrangement, typically to a temperature within the range of 0-20°C, such as 5-15°C.

The CO2 lean process gas leaving the CO2 capture arrangement may have a temperature of less than 15°C, such as less than 10°C, typically a temperature within the range of 0-15°C, such as 0-10°C or 2-8°C. Thus, the process gas leaving the CO2 capture arrangement may have a lower temperature than the process gas entering the CO2 capture arrangement. This may be due to additional cooling, e.g. by means of heat exchangers, in the CO2 capture arrangement.

The CO2 capture arrangement may comprise one or several CO2 absorbers. If several absorbers are used, these may be configured to operate at different temperatures. For instance, the first absorber to receive the chilled process gas may operate at a higher temperature than the last absorber.

The first absorber may conveniently operate at a temperature close to the temperature of the process gas as it leaves the chiller arrangement and enters towards the CO2 capture arrangement. The first absorber may thus operate at a temperature within the range of 0-20°C, such as 5-15°C or 10-15°C or 10-20°C.

The last absorber may conveniently operate at a temperature close to the temperature of the CO2 lean process gas leaving the CO2 capture arrangement towards the chiller arrangement. The last absorber may thus operate at a temperature within the range of 0-15°C, such as 0-10°C or 3-7°C.

The CO2 lean process gas may thus have a relatively low temperature within the system and may be used as coolant. It has been found to be convenient to use the CO2 lean process gas to chill the circulating cooling medium of the chiller arrangement, to in that way recover some of the energy put into cooling the process gas earlier. As discussed above, it may be convenient to chill at least a part of the circulating cooling medium to as low a temperature as possible by means of the CO2 lean process gas, to obtain colder cooling medium without the use of other, more expensive, ways to chill the cooling medium. Thus, at least a part of the circulating cooling medium may be chilled to the same temperature, or only slightly higher, as the temperature of the CO2 lean process gas as it enters the chiller arrangement. Consequently, at least a part of the circulating cooling medium may be chilled to a temperature of less than 15°C, such as less than 10°C, 8°C or 6°C, typically a temperature within the range of 0-15°C, such as 0-10°C, 0-5°C, 2-8°C, 3-7°C or 4-6°C.

The chiller arrangement comprises a first heat exchanger configured to receive the CO2 rich gas stream prior to it being received by the CO2 absorber, chill the gas stream by means of heat exchanging with circulating cooling medium, and allow the chilled gas stream to leave the first heat exchanger towards the CO2 capture arrangement, and a second heat exchanger configured to receive circulating cooling medium, and chill the circulating cooling medium by means of heat exchanging with the CO2 lean gas stream from the CO2 capture arrangement. Of course, additional heat exchangers as well as other components may also be included in the chiller arrangement as convenient.

The circulating cooling medium streams through two different loops, e.g. comprising piping or tubing or any other conduits. The loops comprises the first and second heat exchangers of the chiller arrangement such that the loops guide the cooling medium through the heat exchangers. For instance, the loops may be configured such that one of the loops guides cooling medium through the first heat exchanger and not the second heat exchanger, and the other one of the loops guides cooling medium through the second heat exchanger and not through the first heat exchanger, or both loops may guide cooling medium through both heat exchangers such that e.g. at least parts of both the first and second heat exchangers are comprised in the first cooling medium loop, and at least parts of both the first and second heat exchangers are comprised in the second cooling medium loop. Of course, any one or both of the loops may also guide cooling medium through or via other components, such as additional heat exchangers e.g. with cooling water from a cooling tower. Also, there may be more than two different cooling medium loops.

The two cooling medium loops are configured for different cooling medium flow rates. As discussed above, this implies a higher degree of flexibility in flow rates and temperatures of the cooling medium and may reduce the overall cost of chilling the cooling medium by better using the low temperature process gas from the CO2 capture arrangement, conserving the overall energy of the CO2 removal system. The flow rate of the second cooling medium loop may be lower than the flow rate of the first cooling medium loop. Conveniently, the flow rate of the circulating cooling medium in the first cooling medium loop is more than two times, such as more than three, four, five, six, seven, eight, nine or ten times, the flow rate of the circulating cooling medium in the second cooling medium loop.

The first and second cooling medium loops may be separate from each other such that cooling medium of either one of the loops cannot enter the other one of the loops. Thus, each loop may be independent of the other loop and the cooling medium of each loop only circulates in that loop.

One or both of the cooling medium loops may also extend beyond the chiller arrangement and may e.g. be used as cooling medium within the CO2 capture arrangement. Thus, at least part of a heat exchanger of the CO2 capture arrangement may be comprised in the first and/or the second cooling medium loop. If a part of the cooling medium, e.g. that part which constitutes the circulating cooling medium of one of the loops such as the second loop, is chilled by the CO2 lean process gas to as low a temperature as possible, as discussed above, that cooling medium may be used in a heat exchanger in the CO2 capture arrangement to e.g. chill the process gas entering the last CO2 absorber, which absorber may be the absorber operating at the lowest temperature of the absorbers. Due to unavoidable heat losses, it may not be enough with this circulating cooling medium to chill the process gas to the operating temperature of the last absorber. In that case, an additional heat exchanger, e.g. an electrical one, may be used as complement. Typically, the second cooling medium loop, which has the lower flow rate, is the loop with the cooling medium chilled to the lowest temperature and thus also the loop which may comprise at least part of the heat exchanger for chilling the process gas entering the last absorber.

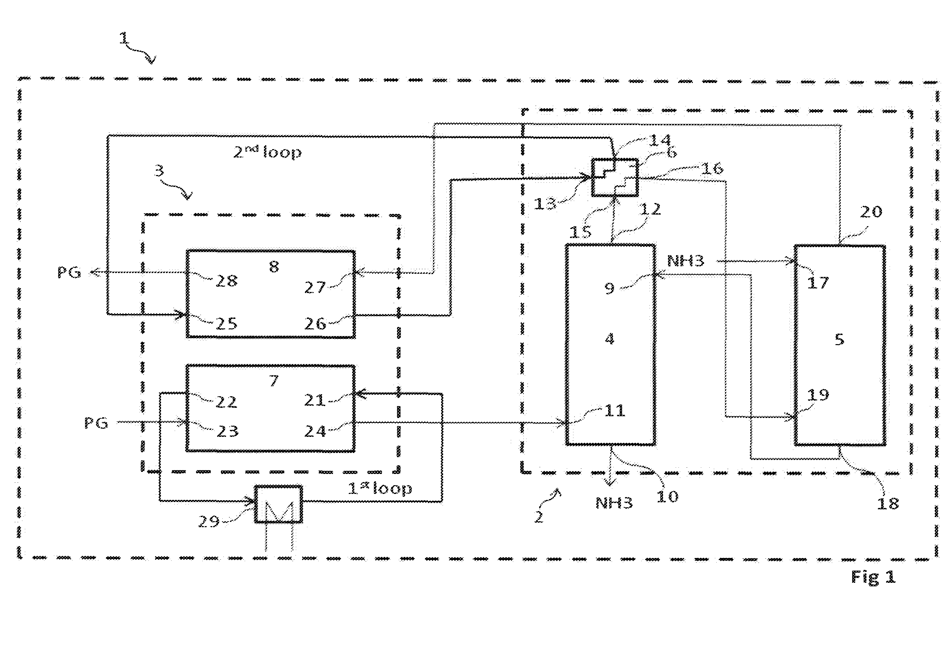

With reference to fig 1, a specific example of a CO2 removal system 1 will now be discussed.

The system 1 comprises a CO2 capture arrangement 2 and a chiller arrangement 3. The CO2 capture arrangement 2 comprises a first absorber 4 and a second (a.k.a. last) absorber 5 as well as a heat exchanger 6. The absorbers are configured to facilitate contact between an ammoniated solution (indicated by "NH3" in the figure) and a process gas (indicated by "PG" in the figure).

Ammoniated solution from the second absorber 5 enters at the top of the first absorber 4 and contacts the process gas, having a temperature of about 10°C, from a first heat exchanger 7 of the chiller arrangement 3, which has entered the first absorber 4 at the bottom of the same, counter currently, typically in some kind of mass transfer device (MTD, not shown), such as a packed bed or distillation tray(s), within the absorber 4. The ammoniated solution is, in the first absorber 4, made CO2 rich or even CO2 saturated and exits the first absorber 4 at the bottom of the same. The CO2 rich ammoniated solution may e.g. be guided to a regeneration arrangement for regeneration to CO2 lean ammoniated solution. The process gas exits the first absorber 4 at the top of the absorber 4 and enters the heat exchanger 6. The first CO2 absorber 4 is thus in fluid connection with the second CO2 absorber 5 via a liquid entry valve 9 at the top of the first CO2 absorber 4, in fluid connection with the regeneration arrangement via a liquid exit valve 10 at the bottom of the first CO2 absorber 4, in fluid connection with the first heat exchanger 7 of the chiller arrangement 3 via a gas entry valve 11 at the bottom of the first CO2 absorber 4 and in fluid connection with the heat exchanger 6 of the CO2 capture arrangement 2 via a gas exit valve 12 at the top of the first CO2 absorber 4.

In the heat exchanger 6, the process gas is cooled down to about 5°C. The process gas may need cooling down both because the operating temperature of the first absorber 4, or rather the temperature of the gas and solution entering the absorber 4, is higher than the operating temperature of the second absorber 5 and because the removal of CO2 from the process gas is an exothermic reaction which generally raises the temperature in the first absorber 4. In the heat exchanger 6, the process gas is chilled, at least partly, by heat exchanging with circulating cooling medium, having a temperature of about 5-6°C, from the chiller arrangement. The heat exchanger 6 is thus in fluid connection with the second heat exchanger 8 of the chiller arrangement 3 via a liquid entry valve 13, in fluid connection with the second heat exchanger 8 of the chiller arrangement 3 via a liquid exit valve 14, in fluid connection with the first CO2 absorber via a gas entry valve 15 and in fluid connection with the second CO2 absorber via a gas exit valve 16.

The process gas that has been guided from the top of the first absorber 4 via the heat exchanger 6 enters the second heat exchanger 5 at the bottom of the same CO2 lean ammoniated solution, e.g. from the regenerator, enters the at the top of the second absorber 5 and contacts the process gas, having a temperature of about 5°C, counter currently, typically in some kind of mass transfer device (MTD, not shown), such as a packed bed or distillation tray(s), within the absorber 5. The ammoniated solution absorbs, or otherwise removes, residual CO2, which was not removed in the first absorber 4, from the process gas, making the process gas CO2 lean. The ammoniated solution is, however, not made saturated with CO2 in the absorber 5, but exits the absorber 5 at the bottom of the same to be used for more absorption in the first absorber 4 as discussed above. The CO2 lean process gas exits the second absorber 5 at the top of the same and enters and is used as coolant in a second heat exchanger 8 of the chiller arrangement 3. The second CO2 absorber 5 is thus in fluid connection with a CO2 lean ammoniated solution source via a liquid entry valve 17 at the top of the second CO2 absorber 5, in fluid connection with the first CO2 absorber via a liquid exit valve 18 at the bottom of the second CO2 absorber 5, in fluid connection with the heat exchanger 6 via a gas entry valve 19 at the bottom of the second CO2 absorber 5 and in fluid connection with the second heat exchanger 8 of the chiller arrangement 3 via a gas exit valve 20 at the top of the second CO2 absorber 5.

CO2 rich process gas, e.g. flue gas from a power plant having a temperature of about 50°C, is cooled down to about 10°C in the first heat exchanger 7 of the chiller arrangement 3 by the first loop of the circulating cooling medium. Cooling medium of a temperature of 10°C or less meets the process gas counter currently in the heat exchanger 7. The first cooling medium loop may include at least a part of a heat exchanger 29, connected to e.g. a cooling tower or electrical chiller, for cooling down the circulating cooling medium of the first cooling medium loop. Process gas enters the heat exchanger 7, is cooled down and exits the heat exchanger 7 towards the first CO2 absorber 4. Cooling medium enters the heat exchanger 7 from the heat exchanger 29, is heated by the process gas and exits the heat exchanger 7 towards the heat exchanger 29 to complete the first cooling medium loop. The first heat exchanger 7 of the chiller arrangement 3 is thus in fluid connection with the heat exchanger 29 via a liquid entry valve 21, in fluid connection with the heat exchanger 29 via a liquid exit valve 22, in fluid connection with a process gas source via a gas entry valve 23 and in fluid connection with the first CO2 absorber 4 via a gas exit valve 24.

The CO2 lean process gas from the second CO2 absorber 5 having a temperature of about 5°C is heated to about 10°C in the second heat exchanger 8 of the chiller arrangement 3 by the second loop of the circulating cooling medium. Cooling medium of a temperature of about 10°C meets the process gas counter currently in the heat exchanger 7 and is cooled down to about 5°C. The second cooling medium loop includes at least a part of the heat exchanger 6 of the CO2 capture arrangement for cooling down the process gas from the first absorber 4 travelling towards the second absorber 5. Process gas enters the heat exchanger 8 from the second absorber 5, is heated and exits the heat exchanger 8 to exit the CO2 removal system 1. Cooling medium enters the heat exchanger 8 from the heat exchanger 6, is cooled down by the process gas and exits the heat exchanger 8 towards the heat exchanger 6 to complete the second cooling medium loop. The second heat exchanger 8 of the chiller arrangement 3 is thus in fluid connection with the heat exchanger 6 via a liquid entry valve 25, in fluid connection with the heat exchanger 6 via a liquid exit valve 26, in fluid connection with the second absorber 5 via a gas entry valve 27 and in fluid connection with the surroundings outside the system 1 via a gas exit valve 28.

Between (or to or from) the valves 9-28, conduits such as flexible or rigid pipes or tubes are used to guide the respective fluids. Also other components may be included, such as pumps to e.g. circulate the cooling medium in the respective cooling medium loops and drive the process gas through the system 1.

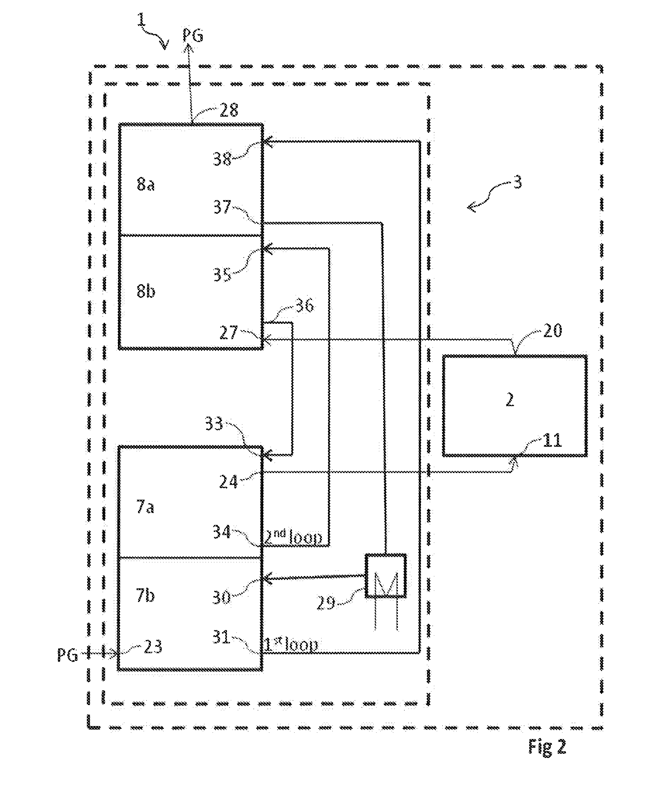

With reference to fig 2, a different specific example of a CO2 removal system 1 will now be discussed.

The system 1 comprises a CO2 capture arrangement 2 and a chiller arrangement 3. The chiller arrangement 3 comprises a first heat exchanger 7, comprising a top stage 7a and a bottom stage 7b, and a second heat exchanger 8, comprising a top stage 8a and a bottom stage 8b. The CO2 capture arrangement 2 is essentially as discussed above with reference to fig 1, with the exception that the heat exchanger 6 is not included or directly connected to anyone of the cooling medium loops. CO2 rich process gas having a temperature of around 10°C enters the CO2 capture arrangement 2 via gas entry valve 11; and CO2 lean process gas having a temperature of about 5°C exits the CO2 capture arrangement 2 via gas exit valve 20.

CO2 rich process gas at a temperature of about 50°C enters the first heat exchanger 7 at the bottom of the bottom stage 7b and rises through the bottom stage 7b into the top stage 7a, through the top stage 7a, and exits the first heat exchanger 7 at the top of the top stage 7a towards the CO2 capture arrangement 2 at a temperature of about 10°C. Circulating cooling medium of the first cooling medium loop, from the top stage 8a of the second heat exchanger 8 and via the heat exchanger 29 e.g. connected to a cooling tower for cooling down the circulating cooling medium of the first cooling medium loop, enters the first heat exchanger 7 at the top of the bottom stage 7b, exchanges heat with the process gas counter currently in the bottom stage 7b and exits the heat exchanger 7 at the bottom of the bottom stage 7b of the first heat exchanger 7 towards the top stage 8a of the second heat exchanger 8. Circulating cooling medium of the second cooling medium loop, from the bottom stage 8b of the second heat exchanger 8, enters the first heat exchanger 7 at the top of the top stage 7a, exchanges heat with the process gas counter currently in the top stage 7a and exits the heat exchanger 7 at the bottom of the top stage 7a of the first heat exchanger 7 towards the bottom stage 8b of the second heat exchanger 8. The first heat exchanger 7 of the chiller arrangement 3 is thus in fluid connection with the heat exchanger 29 via a liquid entry valve 30 at the top of the bottom stage 7b, in fluid connection with the top stage 8a of the second heat exchanger 8 via a liquid exit valve 31 at the bottom of the bottom stage 7b, in fluid connection with the bottom stage 8b of the second heat exchanger via a liquid entry valve 33 at the top of the top stage 7a, in fluid connection with the bottom stage 8b of the second heat exchanger 8 via a liquid exit valve 34 at the bottom of the top stage 7a, in fluid connection with a process gas source via a gas entry valve 23 at the bottom of the bottom stage 7b and in fluid connection with the CO2 capture arrangement 2 via a gas exit valve 24 at the top of the top stage 7a.

CO2 lean process gas from the CO2 capture arrangement and having a temperature of about 5°C enters the second heat exchanger 8 at the bottom of the bottom stage 8b and rises through the bottom stage 8b into the top stage 8a, through the top stage 8a, and exits the second heat exchanger 8 at the top of the top stage 8a towards the surroundings of the system 1. Circulating cooling medium of the first cooling medium loop, from the bottom stage 7b of the first heat exchanger 7, enters the second heat exchanger 8 at the top of the top stage 8a, exchanges heat with the process gas counter currently in the top stage 8a and exits the heat exchanger 8 at the bottom of the top stage 8a of the second heat exchanger 8 towards the bottom stage 7b of the first heat exchanger 7 via the heat exchanger 29. Circulating cooling medium of the second cooling medium loop, from the top stage 7a of the first heat exchanger 7, enters the second heat exchanger 8 at the top of the bottom stage 8b, exchanges heat with the process gas counter currently in the bottom stage 8b until it reaches a temperature of 5-6°C and exits the heat exchanger 8 at the bottom of the bottom stage 8b of the second heat exchanger 8 towards the top stage 7a of the first heat exchanger 7. The second heat exchanger 8 of the chiller arrangement 3 is thus in fluid connection with the top stage 7a of the first heat exchanger 7 via a liquid entry valve 35 at the top of the bottom stage 8b, in fluid connection with the top stage 7a of the first heat exchanger 7 via a liquid exit valve 36 at the bottom of the bottom stage 8b, in fluid connection with the heat exchanger 29 via a liquid exit valve 37 at the bottom of the top stage 8a, in fluid connection with the bottom stage 7b of the first heat exchanger 7 via a liquid entry valve 38 at the top of the top stage 8a, in fluid connection with the CO2 capture arrangement 2 via a gas entry valve 27 at the bottom of the bottom stage 8b and in fluid connection with the surroundings of the system 1 via a gas exit valve 28 at the top of the top stage 8a.

The first cooling medium loop thus comprises part of the bottom stage 7b of the first heat exchanger 7, part of the top stage 8a of the second heat exchanger 8 as well as part of the heat exchanger 29 connected to e.g. a cooling tower; and the second cooling medium loop comprises part of the top stage 7a of the first heat exchanger 7 and part of the bottom stage 8b of the second heat exchanger 8.

Between (or to or from) the valves of fig 2, in analogy with the discussion above relating to fig 1, conduits such as flexible or rigid pipes or tubes are used to guide the respective fluids. Also other components may be included, such as pumps to e.g. circulate the cooling medium in the respective cooling medium loops and drive the process gas through the system 1.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode currently contemplated for carrying out this invention, but that the invention will include all embodiments failing within the scope of the appended claims. Moreover, the use of the terms first, second, etc. do not denote any order or importance or chronology, but rather the terms first, second, etc. are used to distinguish one element from another.

## Claims

1. A carbon dioxide (CO2) removal system for removing CO2 from a CO2 rich gas stream, said system comprising:
a CO2 capture arrangement comprising a CO2 absorber configured to receive the CO2 rich gas stream and contacting the gas stream with an ammoniated solution stream such that CO2 is removed from the gas stream by the ammoniated solution stream to form a CO2 rich ammoniated solution stream and a CO2 lean gas stream; and
a chiller arrangement comprising:
a first heat exchanger configured to receive the CO2 rich gas stream prior to it being received by the CO2 absorber, chill the gas stream by means of heat exchanging with circulating cooling medium, and allow the chilled gas stream to leave the first heat exchanger towards the CO2 capture arrangement, and
a second heat exchanger configured to receive circulating cooling medium, and chill the circulating cooling medium by means of heat exchanging with the CO2 lean gas stream from the CO2 capture arrangement;
wherein at least parts of the first and second heat exchangers are comprised in first and second cooling medium loops for the circulating cooling medium, wherein the second cooling medium loop is configured for a lower flow rate than the first cooling medium loop.

2. The system of claim 1, wherein the first and second cooling medium loops are separate from each other such that cooling medium of either one of the loops cannot enter the other one of the loops.

3. The system of any one of the preceding claims, wherein at least parts of both the first and second heat exchangers are comprised in the first cooling medium loop, and at least parts of both the first and second heat exchangers are comprised in the second cooling medium loop.

4. The system of any one of the preceding claims, wherein at least part of a heat exchanger of the CO2 capture arrangement is comprised in the second cooling medium loop.

5. A method for the operation of a chiller arrangement of a carbon dioxide (CO2) removal system for removing CO2 from a CO2 rich gas stream, said system comprising a CO2 capture arrangement comprising a CO2 absorber configured to receive the CO2 rich gas stream and contacting the gas stream with the ammoniated solution stream such that CO2 is removed from the gas stream by the ammoniated solution stream to form a CO2 rich ammoniated solution stream and a CO2 lean gas stream, the method comprising:
receiving, by a first heat exchanger of the chiller arrangement, the CO2 rich gas stream prior to it being received by the CO2 absorber;
chilling the CO2 rich gas stream by means of a circulating cooling medium in the first heat exchanger;
allowing the chilled CO2 rich gas stream to leave the first heat exchanger towards the CO2 capture arrangement;
receiving, by a second heat exchanger of the chiller arrangement, a circulating cooling medium; and
chilling the circulating cooling medium by means of heat exchanging with the CO2 lean gas stream from the CO2 capture arrangement in the second heat exchanger;
wherein the circulating cooling medium of the first and second heat exchangers is circulated in first and second cooling medium loops wherein the flow rate of the second cooling medium loop is lower than the flow rate of the first cooling medium loop.

6. The method of claim 5, wherein the circulating cooling medium is chilled to less than 10°C, such as less than 6°C, in the second heat exchanger.

7. The method of claim 5 or 6, wherein the flow rate of the circulating cooling medium in the second cooling medium loop is less than half, such as less than a fifth, of the flow rate of the circulating cooling medium in the first cooling medium loop.
